# FASCICULE DE BREVET EUROPEEN

(11) **EP 3 775 563 B1**
(45) Date de publication et mention de la délivrance du brevet: **01.05.2024**
(21) Numéro de dépôt: 19718070.6
(22) Date de dépôt: 02.04.2019
(51) Int. Cl.: F04D 15/00, F04D 15/02, F04D 29/70, E03F 5/22, G01F 23/14

(54) **POMPE A VITESSE VARIABLE COMMANDÉE PAR UN DÉTECTEUR DE NIVEAU D'EAU PIEZOMÉTRIQUE PROTÉGÉ PAR UN TUBE**
VON EINEM PIEZOMETRISCHEN WASSERPEGELSENSOR GESTEUERTE, DREHZAHLVARIABLE PUMPE, WOBEI DER SENSOR DURCH EIN ROHR GESCHÜTZT IST
VARIABLE SPEED PUMP CONTROLLED BY A PIEZOMETRIC WATER LEVEL SENSOR THAT IS PROTECTED BY A TUBE

(30) Priorité: 04.04.2018 MC 2672
(43) Date de publication de la demande: 17.02.2021
(73) Titulaire: Paris, Patrick, 83600 Frejus (FR)
(72) Inventeur: Paris, Patrick, 83600 Frejus (FR)
(74) Mandataire: Axe PI
(86) Numéro de dépôt international: PCT/EP2019/058309
(87) Numéro de publication internationale: WO 2019/193010

(56) Documents cités:
- MC-B1- 200 182
- US-A1- 2013 319 539

## Description

Cette invention se rapporte au domaine technique de l'assainissement des eaux usées.

Après avoir été souillés et évacués dans chaque foyer, les effluents domestiques arrivent dans le réseau public d'assainissement. Dans ce réseau public d'assainissement, les effluents vont cheminer jusqu'à rejoindre un équipement de traitement pour être ensuite évacués en mer ou dans un cours d'eau.

Lors de leurs périples dans le réseau d'assainissement, les effluents circulent généralement dans le sens d'un écoulement gravitaire, de haut en bas, mais il arrive parfois que le relief du terrain que le réseau traverse ne le permette pas. Les aléas du relief imposent la présence d'équipements intermédiaires qui servent à relever les effluents pour leur permettre de circuler d'une altitude jusqu'à laquelle ils ont circulé gravitairement à une altitude supérieure à partir de laquelle ils peuvent reprendre leur course en gravité. En fonction de du relief, il arrive que, pour rejoindre la station de traitement, des effluents aient à passer par plusieurs, voire de nombreux postes de relevage.

La présente invention a notamment pour objet un répéteur hydraulique composé par un dispositif de pompage en ligne combinant un récepteur et un émetteur qui compensent les pertes en charge du transport d'un liquide (eaux claires, usées, chargées ou autres) en amplifiant son débit et sa vitesse, soit un système hydraulique autonome qui permet d'envisager un nouveau type de poste de relevage des eaux usées, différent de ce qui existait jusqu'à ce jour.

A ce jour, il existe deux grands types de poste de relevage sur le marché mondial :
Le plus répandu est le poste de relevage classique : une fosse de stockage des effluents dans laquelle des pompes (immergées ou à sec) viennent pomper les effluents stockés pour les renvoyer vers des côtes altimétriques supérieures à celle de la fosse de stockage,
Le procédé de pompage en ligne, sans stockage qui permet d'utiliser le volume de la canalisation d'arrivée (qui doit être rectiligne sur plusieurs mètres) comme volume de stockage.

Chacune de ces deux solutions existantes comporte des inconvénients importants qui sont très régulièrement rapportés par les exploitants des services publics chargés de gérer ce type d'installations.

Le poste « classique » présente tous les inconvénients de la fosse de stockage d'effluents sceptiques :
Un génie civil important,
Des effluents mis à l'air libre qui génèrent de l'insalubrité et des émanations d'H2S (première cause d'accident du travail mortels dans les équipes des délégataires de services d'assainissement collectifs),
Des débordements en cas d'épisodes orageux importants ou d'obstruction de réseaux de départ.

### La présence de nappes de graisse dans les secteurs d'activité de restauration (pas toujours équipés de bacs à graisses)

Le poste de pompage en ligne classique, lui, évite l'insalubrité mais impose :
Un génie civil important pour abriter la canalisation d'arrivée des effluents qui doit être rectiligne sur environ 5 mètres à l'arrivée dans le poste,
La sonde piézométrique utilisée pour le comptage des effluents est sensible (fragile en cas de choc avec une pierre, car pas de piège à caillou dans ce dispositif, ou un élément solide arrivant à haute vitesse dans l'effluent) et n'est pas « secourue » puisqu'il n'existe aucun autre moyen de mesurer un niveau (pas de stockage pour placer une simple sonde de niveau). En cas de dysfonctionnement de la sonde piézométrique, il y a un temps limité pour l'intervention avant que le poste soit en grave défaut (pas de marge de manoeuvre car aucun stockage),
Des dents dilacératrices fixes qui ne permettent pas de destruction efficace de fillasses, serpillères ou autre matières solides qui arriveraient dans les effluents. Un seul corps hydraulique avec les deux systèmes de pompage qui n'autorise pas le fonctionnement alternatif d'une seule pompe lorsque la seconde est en défaut, en réparation ou en maintenance.

Le brevet monégasque 200182 déposé par le Demandeur divulgue un Accélérateur de Réseau d'Assainissement (ARA) c'est-à-dire un dispositif qui accélère le débit des eaux usées dans le réseau, au niveau des postes de relevage en ligne, au moyen d'une chambre de régulation fermée équipée d'un moyen de mesure du niveau de l'eau dans la chambre et comportant un piège à cailloux dans sa partie basse, suivie, dans le sens voulu de l'écoulement de l'eau, d'une pompe adaptative.

Par adaptative, on entend que la pompe a connaissance du débit mesuré par ledit moyen de mesure et adapte sa fréquence c'est-à-dire la vitesse de rotation de ses roues vortex en fonction de ce débit. Si le niveau de l'eau augmente, le débit de l'eau est accéléré ce qui évite l'engorgement des canalisations.

Le document US 2013/319539 A1 divulgue à la figure 3 une sonde piézométrique protégée par un tube.

Toutefois les accélérateurs de réseaux d'assainissement (ARA) connu présentent encore certains inconvénients, notamment :
- les moyen de mesure du niveau d'eau sont généralement trop encombrants, trop fragiles ou pas suffisamment précis ou pas suffisamment fiables,
- la configuration des accélérateurs existants pourrait être améliorée afin d'augmenter le débit des eaux usées dans le réseau ;
- l'accessibilité des ARA pourrait être améliorée ; et
- la maintenance des ARA pourrait être simplifiée.

Compte tenu de ce qui précède, un problème que se propose de résoudre la présente invention est de fournir un ARA présentant préférentiellement :
- des moyens de mesures améliorés du niveau d'eau,
- une configuration permettant d'augmenter le débit des eaux usées dans le réseau ;
- une accessibilité et une maintenance améliorées.

La solution à ce problème posé a pour objet un Accélérateur de Réseau d'Assainissement tel que défini par la revendication 1.

L'invention est un perfectionnement de l'ARA, comprenant une sonde piézométrique, suspendue au couvercle de la chambre de régulation et protégée par un tube de protection entaillé en chevrons, au lieu de la sonde à base de sonar.

Avantageusement, les cailloux (et plus généralement les objets qui ne peuvent flotter) sont piégés ; de plus, selon l'invention, la sonde est protégée par un tube. On peut ainsi bénéficier de la plus grande précision et du moindre encombrement de la sonde piézométrique sans craindre qu'elle soit endommagée.

L'invention et les avantages qui en découlent seront mieux compris à la lecture de la description et des modes de réalisation non limitatifs qui suivent, illustrés au regard des dessins annexés dans lesquels :
La figure 1 représente une vue en perspective de l'invention

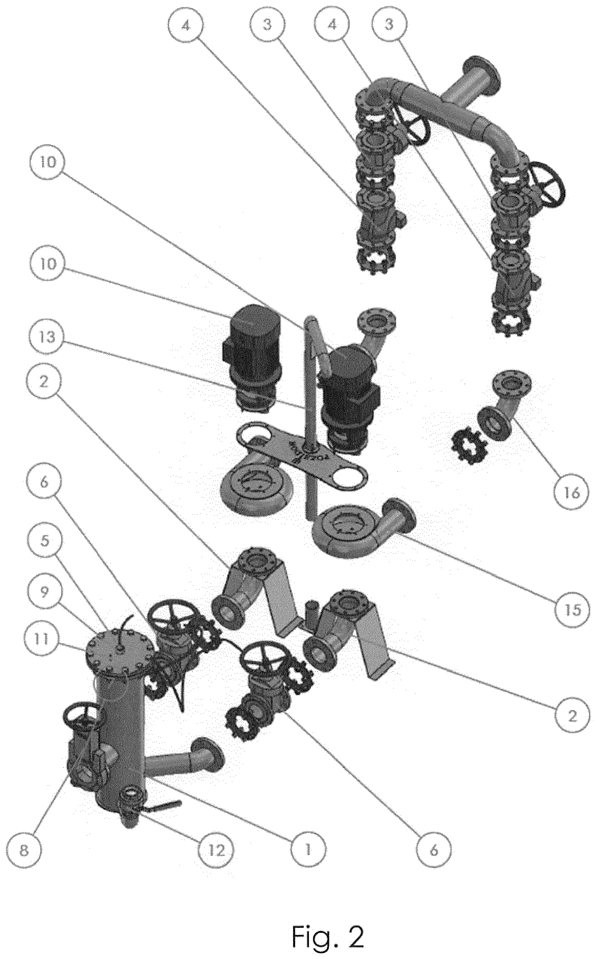

La figure 2 représente les éléments de l'invention décomposée

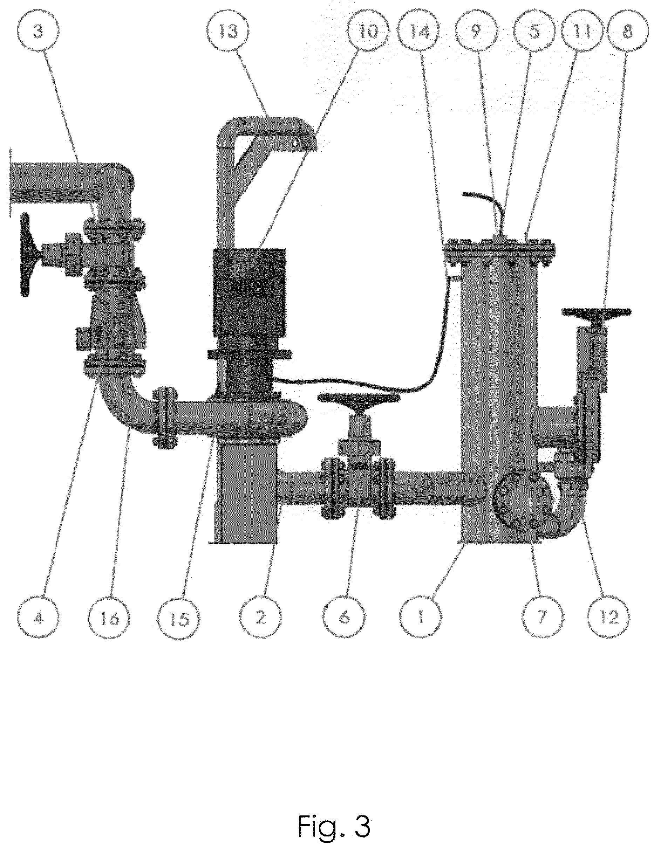

La figure 3 représente une vue latérale de l'invention

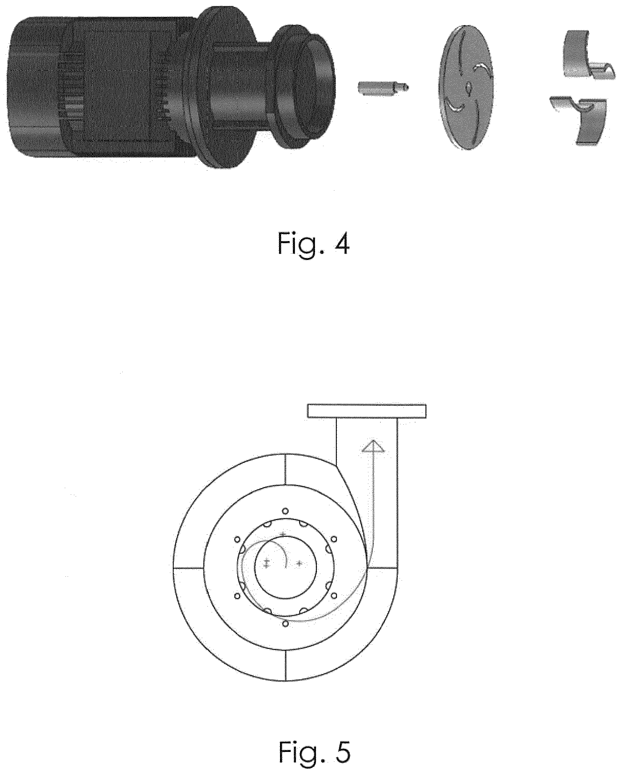

La figure 4 représente une vue décomposée d'une des pompes de l'invention
La figure 5 représente une vue de l'organe hydraulique conique qui accentue l'effet de vortex.

La chambre de régulation fermée est dix fois plus petite que la fosse d'un poste de relevage normal et bien plus courte que la canalisation rectiligne d'un poste en ligne.

Après avoir été utilisées, les eaux usées domestiques arrivent dans le réseau d'assainissement public. Elles vont cheminer, de manière gravitaire jusqu'à l'entrée du poste ARA.

Les eaux pénètrent dans l'ARA par le biais d'un insert mural préférentiellement équipé de joints de compression (spécifiques pour les eaux usées) adaptables à la forme du poste de relevage, sans modification du fil d'eau. Ce mode d'insertion permet avantageusement de conserver le diamètre initial de la canalisation d'arrivée et permet, de plus, de ne pas créer d'effet de freinage à l'arrivée des effluents (ce qui serait générateur de dépôts divers et qui augmenterait le risque de colmatage). Cette insertion est équipée d'une vanne de sectionnement de réseau standard.

Les eaux viennent se déverser dans la partie haute de la chambre de régulation 1.

Les éventuels cailloux ou matières solides ayant réussi à pénétrer le poste grâce à la vitesse d'arrivée de l'effluent sont piégés dans la base de la chambre de régulation qui sert de piège à cailloux équipée d'une trappe de visite ou trappe latérale étanche 7, ainsi qu'une conduite ou vanne de curage 12, lui permettant d'être vidée.

Ainsi, l'Accélérateur de Réseau d'Assainissement selon l'invention comprend préférentiellement, dans la chambre de régulation 1, une trappe de visite latérale 7 et une vanne ou une conduite de curage 12.

La hauteur d'eau qui permet de définir la fréquence et la vitesse de pompage est mesurée, en temps réel, dans cette chambre de régulation 1 par une sonde piézométrique 5 suspendue au centre du toit de la chambre de régulation 1 et protégée dans un tube entaillé en chevrons, de manière à ne pas générer de pression différentielle entre le liquide présent dans la chambre et le liquide présent à l'intérieur du tube, en contact direct avec la sonde piézométrique 5. Un capteur de « seuil de débord » immergé en inox vient compléter et secourir cette mesure.

Préférentiellement, l'Accélérateur de Réseau d'Assainissement selon l'invention comprend donc un tube de protection de la sonde qui est entaillé en chevrons.

Il existe également avantageusement un système d'évent, fixé dans le toit de la chambre de régulation 1, empêchant l'emprisonnement de poches d'hydroxyde de souffre (H2S).

Une résistance chauffante enroulée autour du corps de la chambre de régulation permet avantageusement une montée en température de la structure globale et une élimination des graisses accumulées pendant la nuit.

Ainsi, l'Accélérateur de Réseau d'Assainissement selon l'invention comprend avantageusement une chambre de régulation ceinte d'une résistance chauffante.

Lorsque la régulation le provoque, les effluents sont extraits, par pompage, de la chambre de régulation, en partie basse de la chambre de régulation.

Elles cheminent ensuite dans chacun des deux corps hydrauliques distincts, de manière finement pilotée. Les deux pompes 10 sont avantageusement équipées de roues vortex centrifuges et dilacératrices (dont les pales d'entrainement sont coupées au jet d'eau avec un profil tranchant). Ces deux pompes sont également préférentiellement équipées chacune de variateur de fréquence et de débit communicatif (avec télétransmission). Ces pompes 10 sont équipées d'un système d'auto-amorçage 14, en connexion avec la chambre de régulation 1, ce qui évite la cavitation et le désamorçage des pompes.

Préférentiellement, l'Accélérateur de Réseau d'Assainissement selon l'invention comprend une deuxième pompe identique à la première et indépendante.

Les effluents sont ainsi accélérés et renvoyés, à l'altitude souhaitée, à haute vitesse, pour reprendre leur course dans le réseau public d'assainissement collectif.

Un automate remonte toutes les données mesurées par le dispositif global, en temps réel, et permet de programmer un fonctionnement horaire selon des circonstances habituelles. De plus, il permet un fonctionnement en mode dégradé en cas de panne de tout ou partie du dispositif.

Une ventilation mécanique permet le renouvellement de l'air dans le poste d'accélération de réseau d'assainissement et, ainsi, l'augmentation de la sécurité des travailleurs susceptibles d'ouvrir le poste pour y pénétrer lors des opérations d'entretien et/ou de maintenance.

Le débitmètre de sortie permet de connaitre le débit d'eau en sortie du poste et permet de confirmer le bon fonctionnement des appareils de mesure (sonde Vega et flotteur de niveau). Ce débitmètre positionné en sortie permet également, selon le besoin, de faire une régulation sur le débit d'entrée dans le poste, en fonctionnement coordonné avec l'automate et/ou les variateurs de fréquence.

Autrement dit, l'Accélérateur de Réseau d'Assainissement selon l'invention est avantageusement équipé d'un débitmètre de sortie destiné au contrôle du fonctionnement de la sonde.

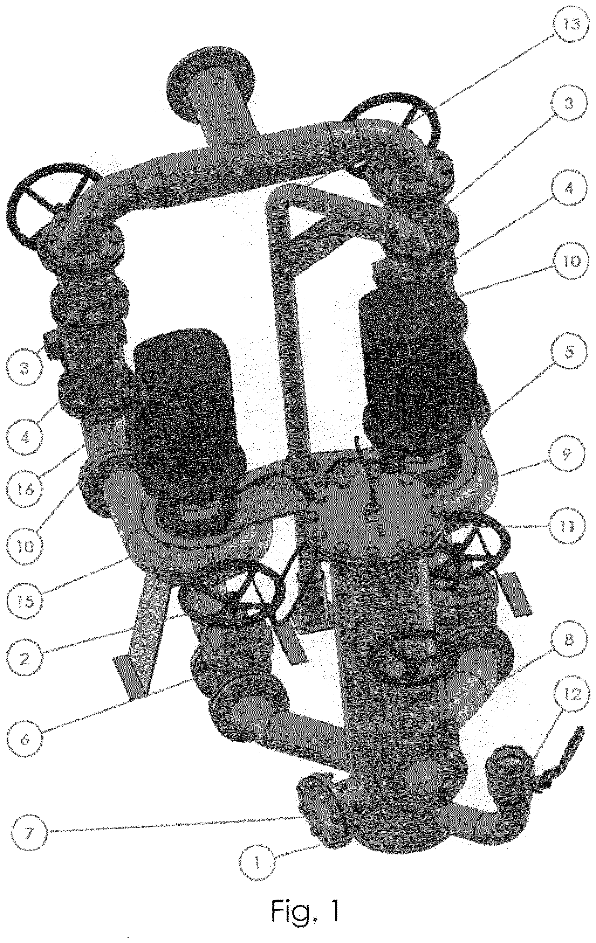

L'ARA tel qu'illustré à la figure 1 est avantageusement composé de :
Une bride en inox d'arrivée des effluents équipée d'une vanne guillotine 8 de diamètre adaptable (qui se raccorde directement sur le réseau public d'assainissement),
Une canalisation en inox de diamètre adaptable (dont la longueur est également adaptable en fonction de la configuration du poste) par laquelle les effluents seront reversés, gravitairement, dans la chambre de régulation,
Une chambre de régulation en inox 1, d'une hauteur approximative de 1400 mm et d'un diamètre de 355,60 mm, dans laquelle les effluents se déversent :
   Sa base sert de piège à caillou,
   Cette chambre est visitable par une trappe latérale étanche 7.

Sa structure cylindrique et verticale est percée cinq fois pour les insertions : d'un côté, aux deux-tiers de sa hauteur en partant de sa base, pour l'arrivée horizontale des effluents, d'un autre côté, deux perçages de diamètre adaptable et horizontaux, pour les deux départs des effluents, un quatrième pour la trappe de visite en partie basse 7 et un dernier en partie basse pour permettre l'installation de la vanne de curage 12.

Sa partie supérieure est un couvercle plat 9 à laquelle est suspendue la sonde piézométrique 5 et son tube de protection capable de détecter le niveau de remplissage, en temps réel, de la chambre de régulation. Ce couvercle est également percé de l'évent 11.

Un flotteur en inox immergé, capable d'alerter le dispositif selon un seuil de débord, également fixé au couvercle de la chambre de régulation.

Une résistance chauffante enroulée autour de son cylindre principal pour permettre une montée en température de la structure globale.

Deux canalisations en inox de diamètre adaptable (dont la longueur est aussi adaptable en fonction de la configuration du poste) par laquelle les effluents seront extraits, par pompage, de la chambre de régulation.

Deux brides de diamètre adaptable équipées de vannes guillotine 6.

Deux coudes en inox à 90° 2 de diamètre adaptable.

Deux volutes en inox 15, ayant une forme d'escargot pour accélérer encore le phénomène de vortex par une augmentation de la vitesse et de la dépression en diminuant l'utilisation d'énergie de rotation.

Deux pompes 10, équipées de roues vortex centrifuges et dilacératrices (dont les pales d'entrainement sont coupées au jet d'eau avec un profil tranchant).

Deux variateurs de fréquence et de débit communicatifs (équipés de télétransmission).

Un automate qui remonte des données de chaque mesure en temps réel,

Deux coudes de départ des pompes en inox (aspiration) de diamètre adaptable 2.

Deux canalisations en inox verticales 16 (refoulement), de diamètre adaptable en fonction du débit de la pompe, de la puissance de son moteur et de son profil hydraulique.

Deux brides de diamètre adaptable équipées de vannes 3 (vanne guillotine ou vanne à opercule caoutchouc).

### Un débitmètre qui mesure le débit en sortie du dispositif

Une ventilation mécanique qui permet le renouvellement de l'air dans le local du poste de relevage pour éviter les accidents du personnel à l'ouverture.

Une potence 13, qui permet la manipulation des pompes sans nécessité d'un engin de levage pour la maintenance.

### Automate :

La présence avantageuse d'un automate permet de programmer un fonctionnement horaire selon les circonstances habituelles. De plus, il permet un fonctionnement en mode dégradé en cas de panne de tout ou partie du dispositif. Un automate ne se contentera pas d'envoyer une alerte pour donner aux agents d'entretien un temps d'intervention mais permettra, en fonction de la situation de régler le temps de fonctionnement des pompes (ce que les variateurs ne sont pas en mesure de gérer), leur débit et leur fréquence de démarrage en fonction de la situation détectée.

### Variateurs :

Préférentiellement, les variateurs permettent de faire varier la vitesse et la fréquence de fonctionnement des pompes. Ils sont équipés d'un système de décolmatage paramétrable en fonction de la situation du poste de relevage concerné (en zone urbaine, rurale, touristique ou industrielle par exemple) : démarrage de la pompe à l'envers en marche très rapide pour se débarrasser d'éventuelles fillasses, sables ou graisses accumulés. Les variateurs permettent aussi, en fonctionnement normal, de générer un phénomène d'auto-curage par la programmation d'une augmentation de la vitesse et du débit de pompage.

Les variateurs qui équipent l'ARA sont avantageusement équipés de borniers amovibles permettant une rapidité d'intervention optimale en exploitation.

Les variateurs qui équipent l'ARA sont également avantageusement équipés de filtres de sortie intégrés pour ne pas polluer le réseau.

Ils sont également avantageusement équipés de potentiomètres intégrés qui permettent une variation manuelle de la fréquence des pompes selon le besoin.

Ces variateurs sont communicatifs et peuvent envoyer des informations par le réseau GSM ou MODBUS à distance.

### Mesure de niveau :

La mesure de niveau est assurée par une sonde piézométrique qui permet un écho très fiable et donc une mesure très fine et très rapide (en temps réel) du niveau de l'eau dans la chambre de régulation. Cette sonde permet des réglages de fonctionnement très précis et une optimisation très efficace de la consommation électrique tout en garantissant un fonctionnement optimal du poste d'accélération de réseau d'assainissement.

Cette sonde piézométrique est avantageusement complétée par un simple capteur de niveau en inox immergé qui permet de compléter et d'étalonner son fonctionnement, mais aussi, de prendre le relais en cas de défaillance de la sonde piézométrique et de permettre un fonctionnement dégradé avec des réglages de fonctionnement pré-paramétrés.

Le capteur de niveau assure, quelles que soient les circonstances, un seuil de débord de la chambre de régulation.

### Ventilation :

Une ventilation mécanique permet avantageusement le renouvellement de l'air dans le poste de relevage et, ainsi, d'augmenter la sécurité des travailleurs susceptibles d'ouvrir le poste pour y pénétrer lors des opérations d'entretien et/ou de maintenance.

### Roues vortex dilacératrices :

Les roues qui équipent préférentiellement les pompes de l'ARA sont découpées sur mesure au jet d'eau, en fonction du contexte. Elles peuvent donc être adaptées à chaque cas particulier rencontré en exploitation (présence de lingettes, filasses, sable...). Leur forme les rend centrifuges et dilacératrices car leurs pales sont coupées au jet d'eau avec un profil tranchant. Chaque roue est donc préférentiellement fabriquée, calculée et adaptée aux contraintes d'exploitation constatées (forme des roues, qualité de l'inox résistance à la corrosion du sable par exemple) pour obtenir un rendement maximum avec une consommation électrique minimum. Les pales tranchantes sont perpétuellement en mouvement, ce qui permet un gain d'efficacité important dans la fonction de dilacération de ces équipements et une diminution du risque de colmatage par des corps enchevêtrés (type filasse ou lingettes par exemple).

Ainsi, préférentiellement, l'Accélérateur de Réseau d'Assainissement selon l'invention comprend des pâles de la roues vortex de la pompe qui sont dilacératrices.

Ces roues sont avantageusement enclavetées (sans vis) dans un corps hydraulique en forme de volute d'escargot qui accroit l'effet cyclonique pour permettre une vitesse optimale, une précision plus importante des réglages de pompage et un diamètre de passage plus importants.

Ainsi, l'Accélérateur de Réseau d'Assainissement selon l'invention comprend avantageusement des roues vortex de la pompe en volute.

### La résistance chauffante :

De façon avantageuse, une résistance chauffante enroule le corps de la chambre de régulation afin de faire monter en température les parois de la cuve pendant la nuit, ce qui permet de diminuer considérablement les dépôts de graisses souvent observés lors de la chute des températures nocturnes, au moment où l'activité du poste est la moindre en termes de mouvement.

### Insertion de la conduite d'arrivée des effluents dans le poste :

Cette insertion se fait préférentiellement par le biais d'un insert mural avec des joints de compression (spécifiques pour les eaux usées) adaptables à la forme du poste de relevage existant. Ce mode d'insertion permet de conserver le diamètre initial de la canalisation d'arrivée et permet, ainsi, de ne pas créer d'effet de freinage à l'arrivée des effluents (ce qui serait générateur de dépôts divers et augmenterait le risque de colmatage). Cette insertion est équipée d'une vanne de sectionnement de réseau standard.

Ainsi, l'Accélérateur de Réseau d'Assainissement selon l'invention comprend avantageusement une chambre connectée à la canalisation d'arrivée des eaux usées par un insert mural avec des joints de compression.

### Corps hydrauliques :

L'ARA selon la présente invention est avantageusement équipé d'au moins deux corps hydrauliques distincts et indépendants avec deux insertions directes sur la chambre de régulation, isolées séparément par des vannes permettant le fonctionnement d'une seule pompe pendant l'entretien ou la maintenance de l'autre. Cette indépendance des deux systèmes hydrauliques permet de ne jamais arrêter totalement le flux des effluents et permet, par ce biais, d'éviter l'accumulation de sable et/ou de détritus dans la conduite et limite donc le besoin d'hydrocurage de celle-ci.

### Chambre de régulation :

Cet organe hydraulique fermé permet de s'affranchir d'une éventuelle longueur de conduite à l'arrivée des effluents (contrairement aux postes de pompage en ligne connus sur le marché qui imposent une longueur de canalisation rectiligne d'environ 5 à 15 mètres). L'ARA peut, grâce à ladite chambre de régulation 1, fonctionner en « bâchées », ce qui permet une optimisation de la consommation électrique globale du poste. De plus, la régulation de l'arrivée des effluents par cet organe hydraulique permet une mesure de niveau beaucoup plus fiable et rapide et permet des réglages très fins de fonctionnement automatisé.

### Débitmètre de sortie :

La présence avantageuse d'un débitmètre de sortie permet de connaître le débit d'eau en sortie du poste (souvent obligatoire pour les postes soumis au dispositif d'autosurveillance à faire par les exploitants). Il permet également de confirmer le bon fonctionnement des appareils de mesure (sonde piézométrique et flotteur de niveau). Ce débitmètre positionné en sortie permet également, selon le besoin, de faire une régulation sur le débit d'entrée dans le poste, en fonctionnement coordonné avec l'automate.

Après avoir été utilisées, les eaux usées domestiques arrivent dans le réseau d'assainissement public. Elles vont cheminer, de manière gravitaire jusqu'à l'entrée 5 du poste ARA.

Les eaux pénètrent dans l'ARA généralement par le biais d'un insert mural avec des joints de compression (spécifiques pour les eaux usées) adaptables à la forme du poste de relevage. Ce mode d'insertion permet de conserver le diamètre initial de la canalisation d'arrivée et permet, ainsi, de ne pas créer d'effet de freinage à l'arrivée des effluents (ce qui serait générateur de dépôts divers et augmenterait le risque de colmatage). Cette insertion est équipée d'une vanne de sectionnement de réseau standard.

Les eaux cheminent ensuite dans chacun des deux corps hydrauliques distincts et viennent se déverser dans la partie haute de la chambre de régulation. Les éventuels cailloux ou matières solides ayant réussi à pénétrer le poste grâce à la vitesse d'arrivée de l'effluent sont piégés dans la base de la chambre de régulation qui sert de piège à cailloux (démontable pour pouvoir être vidée).

La hauteur d'eau qui permet de définir la fréquence et la vitesse de pompage est mesurée, en temps réel, dans cette chambre de régulation par une sonde piézométrique fixée sur le couvercle de celle-ci. Un capteur de « seuil de débord » immergé en inox vient éventuellement compléter et secourir cette mesure.

De préférence, une résistance chauffante enroulée autour du corps de la chambre de régulation permet une montée en température de la structure globale et une élimination des graisses accumulées pendant la nuit.

Lorsque la régulation le provoque, les effluents sont extraits, par pompage, de la chambre de régulation, en partie basse de la chambre de régulation.

Les effluents sont ainsi accélérés et renvoyés, à l'altitude souhaitée, à haute vitesse, pour reprendre leur course dans le réseau public d'assainissement collectif. Les deux pompes sont préférentiellement équipées de roues vortex centrifuges et dilacératrices (dont les pales d'entrainement sont coupées au jet d'eau avec un profil tranchant). De préférence, ces deux pompes sont également équipées, chacune d'un variateur de fréquence et de débit communicatif (avec télétransmission).

Un automate remonte avantageusement toutes les données mesurées par le dispositif global, en temps réel, et permet de programmer un fonctionnement horaire selon des circonstances habituelles. De plus, il permet un fonctionnement en mode dégradé en cas de panne de tout ou partie du dispositif.

La présence éventuelle d'une ventilation mécanique permet le renouvellement de l'air dans le poste de relevage et, ainsi, d'augmenter la sécurité des travailleurs susceptibles d'ouvrir le poste pour y pénétrer lors des opérations d'entretien et/ou de maintenance. Le débitmètre de sortie permet de connaître le débit d'eau en sortie du poste et permet de confirmer le bon fonctionnement des appareils de mesure (sonde piézométrique et flotteur de niveau). Ce débitmètre positionné en sortie permet également, selon le besoin, de faire une régulation sur le débit d'entrée dans le poste, en fonctionnement coordonné avec l'automate.

## Revendications

1. Accélérateur de Réseau d'Assainissement comprenant un poste de relevage en ligne où se succèdent suivant le sens voulu de l'écoulement de l'eau une chambre de régulation fermée (1) comportant un piège à cailloux reliée à une pompe adaptative (10) équipée d'un variateur de fréquence,
la chambre de régulation étant équipée d'une sonde (5) pour y mesurer en permanence le niveau d'eau, laquelle sonde est apte à communiquer électroniquement le niveau d'eau au variateur de fréquence,
**caractérisé en ce que**
la sonde est piézométrique et suspendue au couvercle de la chambre de régulation, dans un tube de protection entaillé en chevrons qui la protège.

2. Accélérateur de Réseau d'Assainissement selon la revendication 1, **caractérisé en ce que** la chambre de régulation est équipée d'un flotteur pour capter le niveau d'eau, destiné à étalonner la sonde et à la remplacer en cas de défaillance.

3. Accélérateur de Réseau d'Assainissement selon les revendications 1 à 2, **caractérisé en ce qu'**il est équipé d'un débitmètre de sortie destiné au contrôle du fonctionnement de la sonde.

4. Accélérateur de Réseau d'Assainissement selon les revendications 1 à 3, **caractérisé en ce que** la chambre est connectée à la canalisation d'arrivée des eaux usées par un insert mural avec des joints de compression.

5. Accélérateur de Réseau d'Assainissement selon les revendications 1 à 4, **caractérisé en ce que** la chambre comporte une trappe de visite latérale (7) et une vanne ou une conduite de curage (12).

6. Accélérateur de Réseau d'Assainissement selon la revendication 5, **caractérisé en ce que** la chambre comporte une trappe de visite latérale (7) et une conduite de curage (12).

7. Accélérateur de Réseau d'Assainissement selon les revendications 1 à 6, **caractérisé en ce que** la chambre de régulation est ceinte d'une résistance chauffante.

8. Accélérateur de Réseau d'Assainissement selon les revendications 1 à 7, **caractérisé en ce qu'**il comprend une ventilation mécanique et **en ce que** le couvercle de la chambre de régulation comporte un évent.

9. Accélérateur de Réseau d'Assainissement selon les revendications 1 à 8, **caractérisé en ce que** les roues vortex de la pompe sont en volute.

10. Accélérateur de Réseau d'Assainissement selon les revendications 1 à 9, **caractérisé en ce que** les pâles de la roues vortex de la pompe sont dilacératrices.

11. Accélérateur de Réseau d'Assainissement selon les revendications 1 à 10, **caractérisé en ce qu'**il comprend une deuxième pompe identique à la première et indépendante.

12. Accélérateur de Réseau d'Assainissement selon les revendications 1 à 11, **caractérisé en ce qu'**il comprend en outre un automate.

13. Accélérateur de Réseau d'Assainissement selon les revendications 1 à 12, **caractérisé en ce qu'**il comprend en outre au moins deux corps hydrauliques distincts et indépendants avec deux insertions directes sur la chambre de régulation, isolées séparément par des vannes (15).

## Patentansprüche

1. Beschleuniger für ein Abwassernetz, der eine Reihenhebeanlage umfasst, in der gemäß der gewünschten Richtung des Wasserflusses eine geschlossene Regulierungskammer (1) mit einer Steinfalle folgt, die mit einer adaptiven Pumpe (10) verbunden ist, die mit einem Frequenzumrichter ausgestattet ist, wobei die Regulierungskammer mit einer Sonde (5) ausgestattet ist, um dort ständig den Wasserstand zu messen, wobei diese Sonde in der Lage ist, den Wasserstand elektronisch an den Frequenzumrichter weiterzugeben,
**dadurch gekennzeichnet, dass**
die Sonde piezometrisch ist und am Deckel der Regulierungskammer in einem gekerbten Schutzrohr mit Fischgrätenmuster hängt, das sie schützt.

2. Beschleuniger für ein Abwassernetz nach Anspruch 1, **dadurch gekennzeichnet, dass** die Regulierungskammer mit einem Schwimmer zum Auffangen des Wasserstands ausgestattet ist, der dazu dient, die Sonde zu kalibrieren und im Falle eines Ausfalls zu ersetzen.

3. Beschleuniger für ein Abwassernetz nach den Ansprüchen 1 bis 2, **dadurch gekennzeichnet, dass** er mit einem Ausgangsdurchflussmesser zur Steuerung der Funktion der Sonde ausgestattet ist.

4. Beschleuniger für ein Abwassernetz nach den Ansprüchen 1 bis 3, **dadurch gekennzeichnet, dass** die Kammer über einen Wandeinsatz mit Kompressionsdichtungen mit dem Abwassereinlauf verbunden ist.

5. Beschleuniger für ein Abwassernetz nach den Ansprüchen 1 bis 4, **dadurch gekennzeichnet, dass** die Kammer eine seitliche Revisionsklappe (7) und ein Spülventil oder eine Spülleitung (12) aufweist.

6. Beschleuniger für ein Abwassernetz nach Anspruch 5, **dadurch gekennzeichnet, dass** die Kammer eine seitliche Revisionsklappe (7) und eine Reinigungsleitung (12) aufweist.

7. Beschleuniger für ein Abwassernetz nach den Ansprüchen 1 bis 6, **dadurch gekennzeichnet, dass** die Regulierungskammer von einem Heizwiderstand umgeben ist.

8. Beschleuniger für ein Abwassernetz nach den Ansprüchen 1 bis 7, **dadurch gekennzeichnet, dass** er eine mechanische Belüftung umfasst und dass der Deckel der Regulierungskammer eine Entlüftung aufweist.

9. Beschleuniger für ein Abwassernetz nach den Ansprüchen 1 bis 8, **dadurch gekennzeichnet, dass** die Vorteräder der Pumpe spiralförmig sind.

10. Beschleuniger für ein Abwassernetz nach den Ansprüchen 1 bis 9, **dadurch gekennzeichnet, dass** die Schaufeln der Vorfexräder der Pumpe zerkleinernd sind.

11. Beschleuniger für ein Abwassernetz nach den Ansprüchen 1 bis 10, **dadurch gekennzeichnet, dass** er eine zweite Pumpe umfasst, die mit der ersten identisch und unabhängig ist.

12. Beschleuniger für ein Abwassernetz nach den Ansprüchen 1 bis 11, **dadurch gekennzeichnet, dass** er außerdem einen Automaten umfasst.

13. Beschleuniger für ein Abwassernetz nach den Ansprüchen 1 bis 12, **dadurch gekennzeichnet, dass** er außerdem mindestens zwei getrennte und unabhängige Hydraulikkörper mit zwei direkten Einsätzen an der Regulierungskammer umfasst, die durch Ventile (15) getrennt voneinander isoliert sind.

## Claims

1. Wastewater system accelerator comprising an in-line lifting station which is followed by a closed regulation chamber (1) in the desired direction of the water flow, the regulation chamber comprising a gravel trap which is connected to an adaptive pump (10) which is equipped with a frequency converter, the regulation chamber being equipped with a probe (5) for continuously measuring the water level therein, which probe is capable of electronically communicating the water level to the frequency converter,
**characterized in that**
the probe is piezometric and is suspended from the cover of the regulation chamber, in a protective tube which is notched in a herringbone pattern that protects the probe.

2. Wastewater system accelerator according to claim 1, **characterized in that** the regulation chamber is equipped with a float to record the water level, which float is intended to calibrate the probe and replace it in the event of failure.

3. Wastewater system accelerator according to claims 1 to 2, **characterized in that** it is equipped with an output flow meter which is intended for monitoring the operation of the probe.

4. Wastewater system accelerator according to claims 1 to 3, **characterized in that** the chamber is connected to the wastewater inlet channel by a wall insert having compression seals.

5. Wastewater system accelerator according to claims 1 to 4, **characterized in that** the chamber comprises a side inspection hatch (7) and a cleaning valve or pipe (12).

6. Wastewater system accelerator according to claim 5, **characterized in that** the chamber comprises a side inspection hatch (7) and a cleaning pipe (12).

7. Wastewater system accelerator according to claims 1 to 6, **characterized in that** the regulation chamber is surrounded by a heat resistor.

8. Wastewater system accelerator according to claims 1 to 7, **characterized in that** it comprises mechanical ventilation and **in that** the cover of the regulation chamber comprises a vent.

9. Wastewater system accelerator according to claims 1 to 8, **characterized in that** the vortex impellers of the pump are in a volute casing.

10. Wastewater system accelerator according to claims 1 to 9, **characterized in that** the blades of the vortex impeller of the pump perform a shredding function.

11. Wastewater system accelerator according to claims 1 to 10, **characterized in that** it comprises a second pump which is identical to the first pump and is independent.

12. Wastewater system accelerator according to claims 1 to 11, **characterized in that** it further comprises an automatic control system.

13. Wastewater system accelerator according to claims 1 to 12, **characterized in that** it further comprises at least two separate, independent hydraulic bodies having two direct insertions to the regulation chamber which are individually isolated by valves (15).
